# FASCICULE DE BREVET EUROPEEN

(11) **EP 3 627 070 B1**
(45) Date de publication et mention de la délivrance du brevet: **10.04.2024**
(21) Numéro de dépôt: 19197888.1
(22) Date de dépôt: 17.09.2019
(51) Int. Cl.: F25B 15/00, B60H 1/02, F25B 27/02, B60H 1/32

(54) **SYSTÈME DE PRODUCTION ET DE GESTION DE FROID PAR UNE MACHINE À ABSORPTION À PARTIR D'ÉNERGIE FATALE D'UN MOTEUR À COMBUSTION**
KÄLTEERZEUGUNGS- UND -STEUERUNGSSYSTEM MITHILFE EINER ABSORPTIONSMASCHINE AUS DER UNGENUTZTEN ENERGIE EINES VERBRENNUNGSMOTORS
SYSTEM FOR PRODUCING AND MANAGING REFRIGERATION BY AN ABSORPTION MACHINE FROM RESIDUAL ENERGY DERIVED FROM A COMBUSTION ENGINE

(30) Priorité: 18.09.2018 FR 1858424
(43) Date de publication de la demande: 25.03.2020
(73) Titulaire: Commissariat à l'Energie Atomique et aux Energies Alternatives, 75015 Paris (FR)
(72) Inventeur: DUMOULIN, Pierre, 38054 GRENOBLE Cedex 9 (FR); PHAN, Hai Trieu, 38054 GRENOBLE Cedex 9 (FR)
(74) Mandataire: Hautier IP

(56) Documents cités:
- EP-A1- 2 669 499
- US-A1- 2006 130 469
- US-A1- 2017 129 307

## Description

### DOMAINE TECHNIQUE DE L'INVENTION

La présente invention concerne le domaine de la production de froid et notamment un système de production et de gestion de froid par une machine à absorption à partir de l'énergie fatale d'un moteur thermique, et un procédé et une utilisation associée.

Elle trouve une application particulièrement avantageuse dans des applications utilisant un moteur à combustion interne que ce soit pour des usages stationnaires tels que des chaudières, des réseaux de chaleur...) ou instationnaires tels que pour les véhicules comprenant un moteur thermique, plus précisément un moteur à combustion interne libérant des gaz d'échappement et équipé d'un circuit de refroidissement à eau.

### ÉTAT DE LA TECHNIQUE

La climatisation nécessite une grande quantité d'énergie. Or, dans les véhicules à moteur thermique comme les moteurs à combustion interne, l'énergie est tirée des carburants tels que l'essence ou le diesel. L'utilisation de la climatisation conduit ainsi à une forte augmentation de la consommation en carburant du véhicule ce qui présente un surcout pour l'utilisateur et une augmentation de la pollution. Il est connu, malgré l'amélioration des moteurs thermiques, qu'une grande partie de l'énergie thermique disponible dans un carburant se transforme en chaleur rejetée dans les gaz d'échappement et le circuit de refroidissement. Cette chaleur est appelée énergie ou chaleur fatale.

On connait notamment l'utilisation d'une machine à absorption dont le générateur est chauffé par les gaz d'échappement permettant ainsi une production de froid. Toutefois, ce type de dispositif ne donne pas entière satisfaction en ce que la production de froid n'est pas stable lors du fonctionnement du véhicule.

On connait également du document WO2008/069819 A1, une machine à absorption utilisant deux sources de chaleur issues d'un moteur thermique à combustion interne à savoir les gaz d'échappement et un circuit de refroidissement à eau. Ce document prévoit un circuit d'eau pouvant être directement l'eau du circuit de refroidissement du moteur qui traverse un échangeur agencé sur une ligne d'évacuation des gaz d'échappement du moteur pour ensuite alimenter le générateur d'une machine à absorption avant de retourner vers le moteur et poursuivre le circuit.

Ce système présente une puissance augmentée par un apport d'énergie supplémentaire, toutefois il présente l'inconvénient de manquer de souplesse dans l'utilisation des sources d'énergie.

On connait également le document D1- US 2006/130469 A1 qui concerne un système de chauffage et de refroidissement pour moteur de véhicule. Le système comprend une machine à absorption agencée sur une sortie d'évacuation de gaz d'échappement pour générer du froid pour l'habitacle. Ainsi, que le document D2 - EP 2 669 499 qui concerne un système de cogénération chaleur et électricité utilisant une pompe à chaleur. Ces systèmes ne permettent d'avoir une gestion optimisée des sources chaudes en fonction des besoins.

Il est donc nécessaire de fournir une solution améliorée de ce système pour simultanément améliorer l'apport et la gestion des sources chaudes et de la production de froid.

L'objet de l'invention est de répondre, au moins en partie, aux limitations précédemment exposées. L'objet de l'invention est plus particulièrement de fournir un système de climatisation et de gestion de la climatisation par une machine à absorption à partir de chaleurs fatales d'un moteur thermique à combustion interne qui soit optimisé.

### RÉSUMÉ DE L'INVENTION

Pour atteindre cet objectif, selon un mode de réalisation, la présente invention prévoit un système de production et de gestion de froid / gestion de l'énergie fatale d'un moteur thermique comprenant entre autres
- une ligne d'évacuation de gaz d'échappement (11) d'un moteur thermique à combustion interne (201),
- un circuit de refroidissement (200) du moteur thermique (201) à combustion interne destiné à recevoir un liquide de refroidissement
- une machine à absorption comprenant un générateur (101) pour la production de froid à partir d'une source de chaleur issue de l'énergie fatale du moteur thermique (201) comprenant au moins partiellement la chaleur fatale des gaz d'échappement du moteur thermique (201) et la chaleur fatale du liquide de refroidissement du circuit de refroidissement (200) du moteur thermique (201),
- un échangeur thermique (10) agencé sur la ligne d'évacuation (11) des gaz d'échappement
- un circuit de couplage (600) configuré pour assurer la connexion fluidique du circuit de refroidissement (200) vers l'échangeur thermique (10), de l'échangeur thermique (10) vers le générateur (101), du générateur (101) vers le circuit de refroidissement (200) de sorte à transférer au générateur (101) la chaleur fatale du circuit de refroidissement (200) et la chaleur fatale des gaz d'échappement.

Additionnellement, le système selon l'invention comprend :
- un circuit intermédiaire (400) configuré pour assurer la connexion fluidique de l'échangeur thermique (10) vers le générateur (101) et du générateur (101) vers l'échangeur thermique (10) de sorte à transférer la chaleur fatale des gaz d'échappement au générateur (101) avantageusement sans connexion fluidique au circuit de refroidissement (200), c'est-à-dire sans couplage, c'est-à-dire en découplant le circuit de refroidissement,
- un circuit de chauffage (500) configuré pour assurer la connexion fluidique du circuit de refroidissement (200) vers l'échangeur thermique (10) et de l'échangeur thermique (10) (200) vers le circuit de refroidissement, assurant avantageusement un découplage physique ou fonctionnel du générateur de la machine à absorption, avantageusement sans connexion fluidique au générateur (101), c'est-à-dire sans couplage, c'est-à-dire en découplant le générateur (101) de manière physique, et/ ou avec une connexion fluidique au générateur (101), dans ce cas-là, la circulation d'un fluide de la machine à absorption est coupée dans le générateur assurant un découplage fonctionnel,
- un module de gestion des circuits comprenant des vannes, qui est configuré comme décrit par la revendication indépendante 1 annexée.

Le système selon l'invention permet de récupérer la chaleur fatale des gaz d'échappement et la chaleur fatale d'un circuit de refroidissement d'un moteur thermique pour alimenter une machine à absorption pour la production de froid qui est compact, efficace et est utilisable dans différentes conditions d'utilisation du moteur thermique. Le système permet de coupler la récupération de chaleur fatale du circuit de refroidissement et la récupération de chaleur fatale des gaz d'échappement pour augmenter la puissance fournie au générateur de la machine à absorption, mais également de découpler le circuit de refroidissement du circuit intermédiaire lorsque le circuit de refroidissement ne comprend pas une chaleur fatale suffisante pour être utilisée par la machine à absorption (exemple : démarrage moteur) ainsi que de découpler le générateur par le circuit de chauffage lorsqu'il n'est pas nécessaire d'alimenter la machine à absorption, mais que le moteur thermique utilise la chaleur fatale des gaz d'échappement.

Le système selon l'invention présente les avantages suivants :
- Augmentation de la plage de température ambiante pendant laquelle la machine à absorption va pouvoir assurer une performance thermique acceptable, car la puissance thermique prélevée va augmenter grâce à la récupération de calories du circuit de refroidissement du moteur, grâce au circuit de couplage.
- Accélération de la montée en température du liquide de refroidissement et donc du moteur en phase de chauffage et tant que la demande en réfrigération n'est pas présente, aidant à l'amorçage du catalyseur et à la chauffe de l'habitacle, grâce au circuit de chauffage.
- Optimisation de l'utilisation du système par découplage du circuit de refroidissement, grâce au circuit intermédiaire.

De plus, l'architecture est assez compacte et simple autorisant l'utilisation du système sur des applications mobiles telles que sur des véhicules équipés de moteur thermique à combustion interne.

Selon une possibilité,
le circuit de couplage (600) comprend une dérivation fluidique (302) assurant la connexion fluidique du générateur (101) vers l'échangeur thermique (10), définissant avantageusement un circuit intermédiaire( 400) de sorte à transférer la chaleur fatale des gaz d'échappement au générateur (101) avantageusement sans connexion fluidique au circuit de refroidissement (200), c'est-à-dire sans couplage, c'est-à-dire en découplant le circuit de refroidissement, et avantageusement le circuit de couplage (600) est configuré pour découpler, par exemple physiquement ou fonctionnellement le générateur de la machine à absorption; suivant un mode de réalisation le circuit de couplage (600) comprend une dérivation fluidique (300) assurant la connexion fluidique de l'échangeur thermique (10) vers le circuit de refroidissement (200) et contournant le générateur (101), définissant avantageusement un circuit de chauffage (500), ; suivant un autre mode de réalisation le générateur n'assure pas la circulation d'un fluide de la machine à absorption, et un module de gestion des dérivations avantageusement des circuits.

Avantageusement, le module de gestion comprend au moins une pompe configurée pour assurer la circulation du liquide de refroidissement dans le circuit de couplage et/ou dans le circuit intermédiaire lorsque le moteur thermique est en arrêt.

Cette disposition permet d'augmenter la durée d'utilisation du système, particulièrement en phase d'arrêt moteur où les calories stockées dans le moteur thermique peuvent être transférées à la machine à absorption.

Un autre aspect de la présente invention concerne un procédé d'utilisation d'un système de production de froid tel que décrit ci-dessus dans lequel le module de gestion des circuits commande la circulation du liquide de refroidissement dans le circuit de couplage (600), et/ou le circuit de chauffage (500) et/ou le circuit intermédiaire (400) en fonction d'au moins deux critères, dont la production de froid par la machine à absorption et la température du liquide de refroidissement (201).

Un autre aspect de la présente invention concerne l'utilisation d'un système tel que décrit ci-dessus pour refroidir l'air d'un habitacle de véhicule.

Un autre aspect de la présente invention concerne un véhicule comprenant un moteur thermique à combustion interne équipé d'un système tel que décrit ci-dessus.

### BRÈVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
La FIGURE 1 est un schéma d'un système selon l'invention.
La FIGURE 2 est un schéma d'un système selon la figure 1 dans lequel le liquide de refroidissement est en circulation dans le circuit de couplage.
La FIGURE 3 est un schéma d'un système selon la figure 1 dans lequel le liquide de refroidissement est en circulation dans le circuit intermédiaire.
La FIGURE 4 est un schéma d'un système selon la figure 1 dans lequel le liquide de refroidissement est en circulation dans le circuit de chauffage.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques.

### DESCRIPTION DÉTAILLÉE DE L'INVENTION

Avant d'entamer une revue détaillée de modes de réalisation de l'invention, sont énoncées ci-après des caractéristiques optionnelles qui peuvent éventuellement être utilisées en association ou alternativement :
- Avantageusement, le circuit de couplage (600), le circuit intermédiaire (400), le circuit de chauffage (500) sont destinés à recevoir un liquide de refroidissement identique au liquide de refroidissement du circuit de refroidissement (200) du moteur.
   L'utilisation d'un seul et même liquide de refroidissement dans les circuits du système permet d'assurer leur mise en connexion fluidique sans difficulté et sans nécessité d'échangeur intermédiaire qui dégraderait les performances du système. A titre d'exemple, le liquide de refroidissement est de l'eau glycolée.
- Avantageusement, le circuit intermédiaire (400) comprend une connexion fluidique (1012) configurée pour assurer la circulation du liquide de refroidissement de l'échangeur thermique (10) vers le générateur (101) qui est commune au circuit de couplage (600).
- Avantageusement, le circuit de chauffage (500) comprend une connexion fluidique (1011) configurée pour assurer la circulation du liquide de refroidissement du circuit de refroidissement (200) vers l'échangeur thermique (10) qui est commune au circuit de couplage (600).

La mutualisation des connexions fluidiques entre les circuits réduits les coûts et facilitent l'intégration du système notamment dans le cas d'applications mobiles tel que dans des véhicules.
- Avantageusement, le système comprend une dérivation (12) de la ligne d'évacuation (11) des gaz d'échappement configurée pour contourner l'échangeur thermique (10).

Cette dérivation permet de limiter les pertes de charge sur la ligne d'évacuation des gaz d'échappement et donc de limiter l'augmentation du couple du moteur qui pourrait entrainer une baisse de puissance de celui-ci.
- Avantageusement, le module de gestion des circuits comprend une pompe (7) destinée à assurer la circulation du fluide de refroidissement dans le circuit intermédiaire (400) est ou dans le circuit de couplage(600).

En l'absence de connexion fluidique du circuit de refroidissement, la circulation du liquide de refroidissement dans le circuit intermédiaire nécessite la présence d'une pompe agencée sur le circuit. De même, lorsque le moteur thermique est à l'arrêt, la circulation du liquide de refroidissement dans le circuit de couplage est permise grâce à la pompe, le moteur thermique ayant une forte inertie, cela permet de maintenir une puissance thermique élevée dans le circuit de couplage.
- Le module de gestion des circuits comprend des vannes (3,4, 5,6) configurées pour orienter le liquide de refroidissement en fonction du circuit à utiliser.

Le circuit de couplage est configuré pour assurer la circulation du liquide de refroidissement entre l'échangeur thermique qui est connecté fluidiquement au générateur, du générateur qui est connecté fluidiquement au circuit de refroidissement qui est lui-même connecté à l'échangeur thermique.

Le circuit intermédiaire est configuré pour assurer la circulation du liquide de refroidissement entre l'échangeur thermique qui est connecté fluidiquement au générateur, du générateur qui est connecté fluidiquement à l'échangeur thermique.

Le circuit de chauffage est configuré pour assurer la circulation du liquide de refroidissement entre l'échangeur thermique qui est connecté fluidiquement au circuit de refroidissement qui est lui-même connecté à l'échangeur thermique.
- Avantageusement, le module de gestion des circuits commande la circulation du liquide de refroidissement dans le circuit de couplage (600) lorsque la température du liquide de refroidissement a atteint une température seuil prédéfinie et que la production de froid est inférieure ou égale à une valeur seuil prédéfinie non nulle.
   - Avantageusement, le module de gestion des circuits commande la circulation du liquide de refroidissement dans le circuit de chauffage (500) lorsque la température du liquide de refroidissement est inférieure à une température seuil prédéfinie et que la production de froid est égale à une valeur seuil prédéfinie nulle.
- Avantageusement, le module de gestion des circuits commande la circulation du liquide de refroidissement dans le circuit intermédiaire (400) lorsque la température du liquide de refroidissement est inférieure à une température seuil prédéfinie et que la production de froid est inférieure ou égale à une valeur seuil prédéfinie non nulle.

L'usage de l'article indéfini " un " ou " une " pour un élément ou une étape n'exclut pas, sauf mention contraire, la présence d'une pluralité de tels éléments ou étapes.

Dans la présente description, l'expression « A fluidiquement raccordé à B» est synonyme de" A est en connexion fluidique avec B" ne signifie pas nécessairement qu'il n'existe pas d'organe entre A et B. Les expressions "agencée sur" ou "sur" sont synonymes de "raccordé fluidiquement à".

L'amont et l'aval en un point donné sont pris en référence au sens de circulation du fluide dans le circuit.

La climatisation est l'action de climatiser un espace, c'est-à-dire de maintenir, à des conditions déterminées de température et d'humidité notamment, et de régénérer l'air d'une enceinte au moyen d'une circulation d'air traité.

Le système selon l'invention permet de traiter un flux d'air par une machine à absorption produisant du froid de sorte à notamment refroidir un flux d'air.

Il est connu qu'un moteur à combustion interne utilise environ un tiers de l'énergie primaire en puissance moteur, et perde un tiers en chaleur récupérée par un circuit de refroidissement du moteur et un tiers en chaleur récupérée par des gaz d'échappement. Ces pertes sont dénommées énergie fatale du moteur thermique à combustion interne.

Le système selon l'invention exploite l'énergie fatale et plus précisément deux sources de chaleur fatale.

Selon l'invention, le système utilise une machine à absorption qui tire l'énergie nécessaire à son fonctionnement de l'énergie fatale du moteur thermique à combustion interne comprenant au moins partiellement la chaleur des gaz d'échappement et la chaleur du circuit de refroidissement
Un moteur thermique 201 à combustion interne est équipé d'une ligne d'évacuation des gaz d'échappement 11 destinée à évacuer les gaz d'échappement et d'un circuit de refroidissement 200. En effet, le moteur doit être maintenu dans une certaine gamme de température pour être le plus performant et ne pas être endommagé. Le circuit de refroidissement 200 d'un moteur thermique 201 doit permettre d'éviter les surchauffes du moteur.

Le moteur thermique à combustion 201 peut être refroidi par circulation d'un liquide à basse température acheminant les calories vers un radiateur 202 afin de les rejeter dans l'air 1. Il existe d'autres solutions comme le refroidissement par air, plus simple, mais beaucoup moins efficace. La présente invention concerne un circuit de refroidissement 200 configuré pour recevoir un liquide de refroidissement. Le liquide de refroidissement est un liquide assurant la protection contre le gel, la protection contre la surchauffe, le transfert de chaleur optimal, la protection contre la corrosion, l'érosion et la cavitation des éléments du moteur, même à très hautes températures. Le liquide de refroidissement est par exemple de l'eau additivité par au moins un agent anticorrosion et au moins un agent anti-gel.

Le circuit de refroidissement 200 comprend au moins un radiateur 202 destiné à évacuer les calories dans l'air libre 1 et refroidir si nécessaire le liquide de refroidissement grâce à l'air qu'il reçoit. Le radiateur 202 est avantageusement situé à l'avant du véhicule dans le cas d'application mobile.

Le circuit de refroidissement 200 comprend un premier circuit dit circuit réduit 211 assurant la circulation du liquide de refroidissement à proximité du moteur thermique 201, sans circulation au niveau du radiateur 202. Le circuit réduit 211 permet de favoriser une montée en température rapide du moteur 201. Le circuit réduit 211 comprend une entrée 2012 du liquide de refroidissement dans le moteur thermique 201, une sortie 2011 du liquide de refroidissement hors du moteur thermique 201 et une dérivation 204 assurant la circulation du liquide de refroidissement hors du moteur de la sortie 2011 vers l'entrée 2012, mais en dérivation du radiateur 202 de sorte à ne pas dissiper les calories du liquide de refroidissement. Le circuit de refroidissement comprend un circuit principal. Le circuit principal comprend l'entrée 2012 du liquide de refroidissement dans le moteur thermique 201, la sortie 2011 du liquide de refroidissement hors du moteur thermique 201 et une connexion fluidique entre la sortie 2011 et l'entrée 2012 sur laquelle est agencé le radiateur 202. Avantageusement, le circuit principal comprend la dérivation 204 décrite ci-dessus. Lorsque le moteur 201 est chaud, le circuit de refroidissement 200 est complet ce qui permet la circulation du liquide de refroidissement au niveau du radiateur 202.

Le circuit de refroidissement 200 comprend un module de régulation 205 configuré pour gérer le débit du liquide de refroidissement devant être injecté vers le radiateur 202 afin de respecter une consigne de température de régulation du liquide de refroidissement moteur. Ce module 205 comprend également une sonde de température qui permet de gérer les stratégies de pilotage du moteur (exemple : gestion de la combustion réalisée en fonction de ce paramètre). Le module de régulation 205 comprend par exemple un thermostat ou calorstat. On entend par calorstat une vanne thermique répondant au changement de température du liquide de refroidissement tel qu'un système de cire qui se dilate selon la chaleur afin de libérer, ou non, le ou un thermostat avec un élément chauffant intégré nommé couramment « thermostat piloté ». Préférentiellement, le module de régulation est géré par le module de gestion des circuits, de sorte à réguler la température du liquide de refroidissement à une température différente selon que le moteur soit en pleine charge (le liquide de refroidissement doit être un peu plus froid) et sur des points à forte occurrence où il est possible d'avoir le liquide de refroidissement un peu plus chaud. Il faut savoir que ce liquide de refroidissement plus chaud a un impact direct sur la performance de la machine à absorption. La température est choisie en fonction de par exemple la charge moteur et/ou du régime moteur et/ou du besoin en réfrigération. Par exemple, la température prédéfinie pour le liquide de refroidissement peut être de 105°C sur point moyennement sévère et 80°C si sévère. Le fonctionnement de la machine à absorption nécessite avantageusement une température minimale entre 100°C et 110°C. Selon l'invention, il a pu être constaté que la température du liquide de refroidissement optimal pour un couple de moteur pour une température ambiante comprise entre 30°C et 45°C est comprise entre 95 et 100 °C.

Avantageusement, le circuit de refroidissement 200 comprend un circuit d'alimentation 210 d'un aérotherme 203 agencé par exemple dans l'habitacle du véhicule. La circulation du liquide de refroidissement dans le circuit d'alimentation 210 est activée lorsque le chauffage de l'habitacle du véhicule est demandé.

Le système selon l'invention est destiné à traiter l'air, notamment le refroidir, d'un habitacle d'un véhicule. Ainsi, l'intérieur de l'habitacle peut être rafraichi par le système qui utilise l'énergie fatale des gaz d'échappement produits par le moteur thermique du véhicule et par l'énergie fatale du circuit de refroidissement.

Une machine à absorption est une pompe à chaleur à absorption thermique utilisant des couples réfrigérant/sorbant présentant de fortes affinités. Cette solution présente de faibles consommations électriques, l'énergie principale étant issue de la source thermique, permettant de limiter le coût de fonctionnement dans le cas de la valorisation d'une source d'énergie à bas coût ou de la chaleur fatale. De plus, les fluides frigorigènes utilisés dans les dispositifs à absorption ne présentent aucun ou de faible impact environnemental : ni sur le réchauffement climatique (GWP pour Global warning potential = 0), ni sur la couche d'ozone (ODP pour Ozone depletion potential = 0).

Une machine à absorption comprend quatre échangeurs principaux (générateur 101, absorbeur 104, condenseur 102 et évaporateur 103), et avantageusement de un à trois échangeurs secondaires. Le rôle des trois échangeurs secondaires (non représenté) est d'améliorer les performances de la machine telles que : un rectifieur, un économiseur, un sous-refroidisseur. Selon une possibilité non représentée, la machine à absorption comprend également au moins une pompe à solution et au moins deux vannes de détente. Ce type de machine fonctionne selon trois niveaux de température : un niveau de température basse correspondant à la production de froid à l'évaporateur 103, un niveau de température intermédiaire correspondant à la température de condensation du fluide frigorigène, mais également à celle d'absorption du fluide frigorigène par l'absorbant et un niveau de température élevé correspondant à la température motrice du générateur 101. Une machine à absorption fonctionne pour une part à haute pression entre la pompe en amont du générateur 101 et le détendeur, en aval du condenseur 102, et pour une autre part à basse pression entre le détendeur, en aval du condenseur 102 et la pompe en amont du générateur 101.

Ce cycle thermodynamique est réalisable en raison de l'écart de pression de vapeur entre l'absorbant et le fluide frigorigène qui est variable en fonction de la température et de la pression. Cette variabilité permet d'avoir un écart de concentration entre la solution pauvre et la solution riche décrites ci-après. L'avantage de ce cycle à absorption est que la compression mécanique est remplacée par une compression thermochimique qui utilise de la chaleur, c'est-à-dire une source d'énergie primaire dégradée. Le seul apport d'énergie primaire nécessaire se situe au niveau de la pompe, mais son travail est environ 96 fois inférieur au travail que le compresseur de vapeur doit fournir pour des conditions de fonctionnement similaires.

Selon l'invention, la machine à absorption comprend une solution de travail fluide frigorigène/absorbant comprenant par exemple le couple ammoniac /eau (NH3/H2O).

Ce couple est utilisable pour des applications de climatisation, mais aussi de réfrigération et il n'y a pas de cristallisation possible sur les plages de fonctionnement en pression et température. Par contre, pour ce couple, l'écart de pression de vapeur entre l'absorbant et le fluide frigorigène est faible. Il y a donc des traces d'eau emmenées avec la vapeur d'ammoniac en sortie du générateur nécessitant parfois la présence d'un rectifieur.

La solution de travail est dite riche, car la concentration en fluide frigorigène est plus importante que dans la solution de travail dite pauvre.

Une machine à absorption formant partie d'une réalisation exemplaire de l'invention est décrite ci-après dont un exemple de réalisation est illustré sur les figures.

La machine à absorption formant partie d'une réalisation exemplaire de l'invention comprend :
- Un générateur 101 configuré pour vaporiser le fluide frigorigène. Le générateur 101 est connecté fluidiquement à l'absorbeur 104 et au condenseur 102. Le générateur 101 comprend une connexion fluidique avec l'absorbeur 105 permettant l'entrée de la solution de travail dite riche dans le générateur 101, préférentiellement directement. Selon un mode de réalisation non représenté, la machine à absorption comprend entre le générateur 101 et l'absorbeur 104, un économiseur, un détendeur et une pompe. L'économiseur et le détendeur assurent la circulation de la solution de travail entre l'absorbeur 104 et le générateur 101 et inversement entre le générateur 101 et l'absorbeur 104 en générant la solution de travail dite pauvre et la solution de travail dite riche. Le générateur 101 comprend une connexion fluidique avec le condenseur 102 permettant la sortie de la vapeur de fluide frigorigène hors du générateur 101, préférentiellement directement sauf par exemple en présence d'un rectifieur. Le générateur 101 comprend également une entrée et une sortie de source de chaleur permettant l'apport de chaleur nécessaire à la vaporisation du fluide frigorigène. Selon l'invention, la source de chaleur ou source chaude comprend la chaleur fatale des gaz d'échappement d'un moteur à combustion interne 201, par exemple d'un véhicule, destinés avantageusement à circuler dans une ligne d'évacuation des gaz 11 et la chaleur fatale du liquide de refroidissement issu du circuit de refroidissement 200 du moteur thermique 201. La source chaude provient au moins partiellement de la chaleur fatale des gaz d'échappement d'un moteur à combustion interne 201 avantageusement d'un véhicule et de la chaleur fatale du circuit de refroidissement 200du moteur thermique 201.

La machine à absorption comprend :
- Un condenseur 102 configuré pour condenser la vapeur de fluide frigorigène. Le condenseur 102 est connecté fluidiquement au générateur 101 et à l'évaporateur 103. Le condenseur 102 comprend une connexion fluidique issue du générateur 101 permettant l'entrée de la vapeur de fluide frigorigène dans le condenseur 102, préférentiellement directement ou au travers d'un rectifieur. Le condenseur 102 comprend une connexion fluidique avec l'évaporateur 103, permettant la sortie du fluide frigorigène à l'état liquide, directement ou au travers d'un détendeur destiné à amener le fluide frigorigène à sa pression d'évaporation, il abaisse la pression du fluide. Le condenseur 102 comprend également une source de refroidissement tel qu'une circulation d'air 1 pour assurer son fonctionnement normal. Le changement de phase du fluide frigorigène de l'état vapeur à l'état liquide s'accompagne d'une libération de chaleur qui est transmise au flux d'air circulant par exemple autour de tube. L'air réchauffé est évacué du système. Le condenseur 102 est agencé au niveau de la façade avant d'un véhicule dans le cas d'une application mobile et plus précisément au niveau du radiateur 202 du circuit de refroidissement 200.

Avantageusement, la machine à absorption comprend un rectifieur disposé entre le générateur 101 et le condenseur 102. Le rectifieur permet d'enlever par condensation les traces d'eau entrainées avec le fluide réfrigérant en sortie du générateur 101 et assure ainsi le bon fonctionnement de la machine.

La machine à absorption comprend un détendeur agencé entre le condenseur 102 et l'évaporateur 103. Le détendeur est configuré pour détendre le fluide frigorigène à l'état liquide issu du condenseur 102. Le détendeur amène le fluide frigorigène à sa pression d'évaporation.

Avantageusement, la machine à absorption peut comprend un sous-refroidisseur agencé entre le condenseur 102 et l'évaporateur 103. Le sous refroidisseur permet de récupérer de l'énergie et donc de réduire la taille de du condenseur 102 et de l'évaporateur 103 et ainsi d'améliorer de manière notable les performances de la machine. La pertinence de ce composant est fonction des températures de fonctionnement, la taille de la machine et le coût des échangeurs.

La machine à absorption comprend :
- Un évaporateur 103 configuré pour vaporiser le fluide frigorigène et produire une énergie frigorifique. L'évaporateur 103 est connecté fluidiquement au condenseur 102 et à l'absorbeur 104. L'évaporateur 103 comprend une connexion fluidique issue du condenseur 102, plus précisément avec un détendeur, permettant l'entrée du fluide frigorigène à l'état liquide dans l'évaporateur 103, préférentiellement directement. L'évaporateur 103 comprend une connexion fluidique avec l'absorbeur 104, permettant la sortie de la vapeur de fluide frigorigène, préférentiellement directement. L'évaporateur 103 comprend également une entrée d'une source de chaleur à refroidir et une sortie de la source de chaleur refroidie. Le changement de phase du fluide frigorigène de l'état liquide à de l'état vapeur s'accompagne d'une transmission de chaleur de la source chaude, ou de chaleur, à refroidir au fluide frigorigène. La source chaude à refroidir transmet des calories et voit ainsi sa température s'abaisser. Selon l'invention, la source chaude à refroidir est, soit directement ou indirectement, par au moins un intermédiaire tel un fluide frigoporteur à refroidir, de l'air 3 à refroidir par exemple pour l'habitacle du véhicule.

Selon l'invention, l'évaporateur 103 est agencé au niveau de l'aérotherme 203, plus précisément dans un groupe de climatisation d'un véhicule dans le cas d'une application mobile pour assurer le refroidissement de l'habitacle du véhicule.

La machine à absorption comprend :
- Un absorbeur 145 configuré pour condenser la vapeur de fluide frigorigène issue de l'évaporateur 103. L'absorbeur 104 est connecté fluidiquement à l'évaporateur 103 et au générateur 101. L'absorbeur 104 comprend une connexion fluidique issue de l'évaporateur 103 permettant l'entrée du fluide frigorigène à l'état de vapeur dans l'absorbeur 104, préférentiellement directement. L'absorbeur 104 comprend une connexion fluidique avec le générateur 101, plus précisément avec une pompe destinée à mettre en circulation la solution de travail dans le circuit de circulation fluidique, plus précisément une solution de travail dite riche sort de l'absorbeur 104 en direction du générateur 101 par la connexion fluidique préférentiellement directement connectée à la pompe. Avantageusement, la pompe est connectée fluidiquement, préférentiellement directement, à un économiseur au travers duquel la solution de travail dite riche est réchauffée avant d'être transmise au générateur 101. Avantageusement, l'économiseur est un échangeur transmettant de la chaleur de la solution dite pauvre issue du générateur 101 vers la solution dite riche issue de l'absorbeur 105. L'économiseur permet une récupération d'énergie permettant de réduire la taille de l'absorbeur 104 et du générateur 101 et ainsi améliorer de manière notable les performances de la machine. Avantageusement, de manière non représentée, l'absorbeur 104 comprend une connexion fluidique avec le générateur 101, plus précisément avec un détendeur. La connexion fluidique permet l'entrée de la solution de travail dite pauvre issue du générateur 101 dans l'absorbeur 104, préférentiellement directement. Le changement de phase du fluide frigorigène de l'état vapeur à l'état liquide s'accompagne d'une libération de chaleur qui est transmise à une source de refroidissement tel qu'un flux d'air 1 circulant par exemple autour de tubes. L'air réchauffé est évacué du système. Selon l'invention, l'absorbeur 104 est agencé au niveau de la façade avant d'un véhicule dans le cas d'une application mobile et plus précisément au niveau du radiateur 202 du circuit de refroidissement 200.

La machine à absorption comprend un circuit fluidique à absorption 100 configuré pour assurer la connexion fluidique des différents composants de la machine à absorption. Le circuit fluidique à absorption 100 est un circuit fermé destiné à recevoir la solution de travail.

Selon l'invention, le système comprend une ligne d'évacuation de gaz 11 pour conduire les gaz d'échappement du moteur thermique 201 à l'extérieur du moteur. La machine à absorption est en conduction thermique avec la ligne d'évacuation 11 de gaz de sorte à récupérer la chaleur fatale des gaz qui constitue au moins en partie la source de chaleur 1 du générateur 107. Avantageusement, La ligne d'évacuation de gaz est en conduction thermique indirecte avec le générateur 101 c'est-à-dire que le dispositif comprend un échangeur de chaleur 10 agencé entre le générateur 101 et la ligne d'évacuation 11 de gaz pour transférer la chaleur fatale, des gaz d'échappement au générateur 101. La ligne d'évacuation de gaz 11 comprend avantageusement une dérivation 12 des gaz d'échappement destinée au contournement de l'échangeur de chaleur 10 pour éviter des pertes de charge trop importantes sur la ligne d'évacuation des gaz 11.

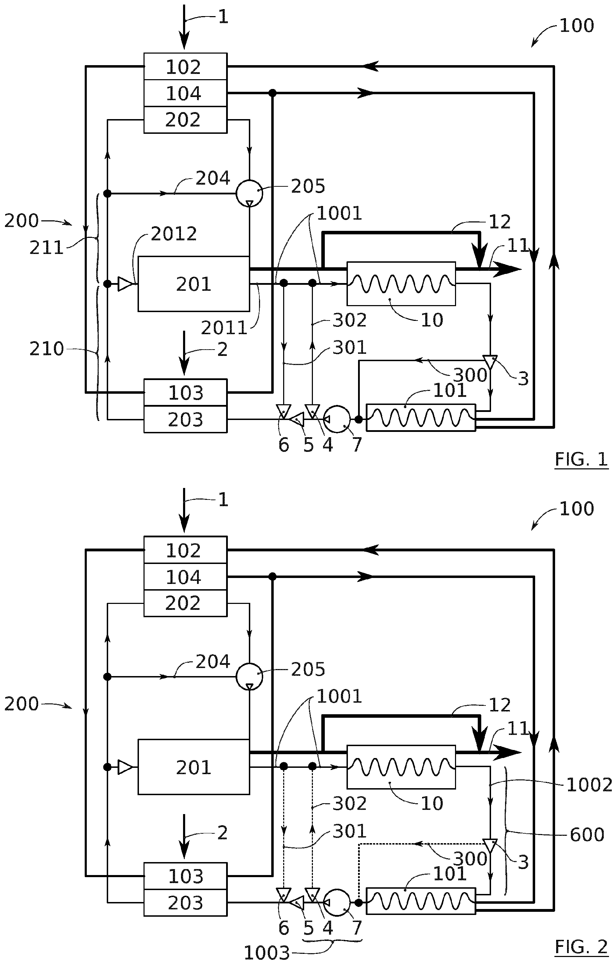

Selon l'invention, le système comprend un circuit de couplage 600 illustré à la figure 2. Le circuit de couplage est configuré pour assurer la connexion fluidique du circuit de refroidissement 200 à l'échangeur thermique 10 et au générateur 101. Le circuit de couplage est destiné à recevoir un fluide caloporteur préférentiellement identique au fluide de refroidissement du circuit de refroidissement 200. De cette manière, le circuit de refroidissement 200 est en connexion fluidique avec l'échangeur thermique 10 et le générateur 101 et il n'est pas nécessaire d'agencer un échangeur intermédiaire entre le circuit de refroidissement 200 et le circuit de couplage. La récupération de la chaleur fatale du circuit de refroidissement est ainsi optimale.

Le circuit de couplage 600 comprend une connexion fluidique 1001 assurant la connexion du circuit de refroidissement 200, avantageusement en aval du moteur thermique 201, c'est à dire la sortie 2011 du moteur thermique 201 avec l'échangeur thermique 10, préférentiellement l'entrée de l'échangeur thermique 10. Le circuit de couplage 600 comprend une connexion fluidique 1002 assurant la connexion de l'échangeur thermique 10, préférentiellement la sortie, avec le générateur 101. L'échangeur thermique 10 assure le transfert des calories des gaz d'échappement circulant dans la ligne d'évacuation 11 des gaz vers le liquide de refroidissement. Le circuit de couplage 600 comprend une connexion fluidique 1003 assurant la connexion du générateur 101, préférentiellement son entrée, au circuit de refroidissement 200, avantageusement en amont du moteur thermique 201, préférentiellement en amont du radiateur 202. Selon l'agencement illustré aux figures 1 et 2, la connexion fluidique 1003 assure la connexion avec le circuit de refroidissement 200 et plus précisément avec le circuit d'alimentation 210 de l'aérotherme 203.

La circulation du liquide de refroidissement dans le circuit de couplage 600 est commandée par un module de gestion des circuits comprenant une pluralité de vannes 3,4, 5,6 et avantageusement au moins une pompe 7. Le module de gestion des circuits autorise la circulation du liquide de refroidissement dans le circuit de couplage 600 lorsque la production de froid est demandée et que la température du liquide de refroidissement a atteint une valeur cible autorisant l'utilisation de la chaleur fatale du liquide de refroidissement et des gaz d'échappement. Lorsque le circuit de couplage 600 est en fonctionnement et que le moteur thermique fonctionne, la circulation du liquide de refroidissement est assurée par une pompe du circuit de refroidissement 200. Typiquement pour une application mobile dans un véhicule, cela correspond à une phase de roulage sur route ou autoroute avec moteur chaud. À défaut de pompe sur le circuit de refroidissement 200 ou lorsque le moteur thermique 201 est arrêté, la pompe 7 du module de gestion permet d'assurer la circulation du liquide de refroidissement. La pompe 7 est avantageusement agencée sur le circuit de couplage 600, à titre d'exemple illustré sur les figures, elle est agencée au niveau de la connexion fluidique 1003 assurant la connexion fluidique entre le générateur 10 et le circuit de refroidissement 200. Typiquement pour une application mobile dans un véhicule, cela correspond à une phase d'arrêt du moteur avec un moteur chaud et demande de climatisation, dans ce cas-là énergie fatale du moteur thermique 201 est utilisée de manière optimale contribuant également à abaisser plus rapidement la température du moteur à l'arrêt.

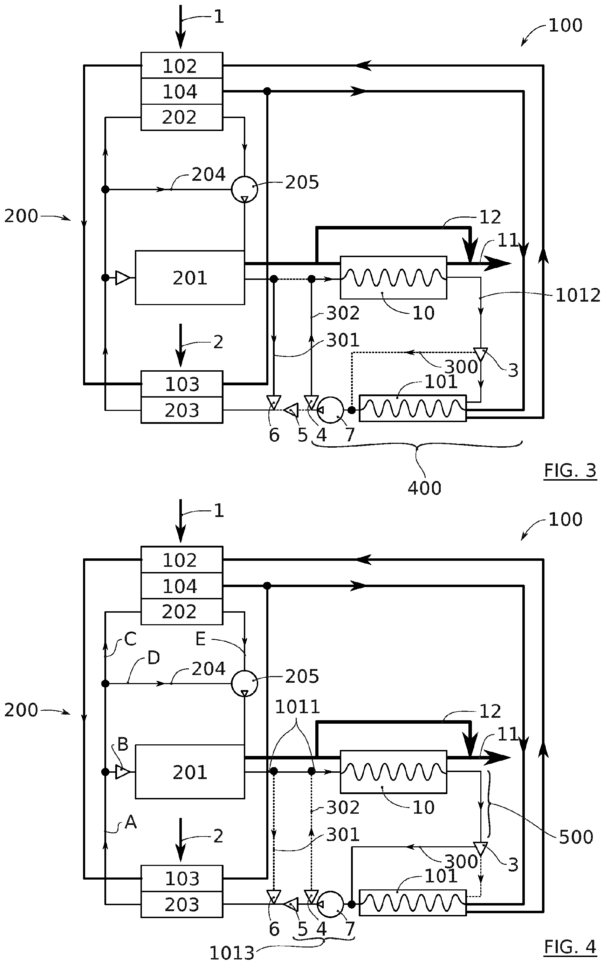

Selon l'invention, le système comprend un circuit intermédiaire 400 illustré à la figure 3. Le circuit intermédiaire 400 est configuré pour assurer la connexion fluidique de l'échangeur thermique 10 au générateur 101. Le circuit intermédiaire 400 est destiné à recevoir un fluide caloporteur préférentiellement identique au fluide de refroidissement du circuit de refroidissement 200. De cette manière, le circuit intermédiaire 400 comprend certaines connexions fluidiques en commun avec le circuit de couplage 600.

Le circuit intermédiaire 400 comprend une connexion fluidique 1012 assurant la connexion de l'échangeur thermique 10, préférentiellement la sortie, vers le générateur 101, préférentiellement l'entrée. Cette connexion fluidique 1012 est ainsi commune à la connexion fluidique 1002 du circuit de couplage 600. Le circuit intermédiaire 400 comprend une connexion fluidique 302 assurant la connexion du générateur 101, préférentiellement la sortie, vers l'échangeur thermique 10, préférentiellement l'entrée. Selon l'agencement illustré à la figure 1 et 3, la connexion fluidique 302 peut être considérée comme une dérivation agencée sur le circuit de couplage 600 pour former le circuit intermédiaire 400. Avantageusement, la connexion fluidique est une dérivation comprenant deux noeuds de connexion dont l'un est agencé sur la connexion fluidique 1001 du circuit de couplage 600 assurant la connexion entre le circuit de refroidissement 200 et l'échangeur thermique 10 et dont l'autre est agencé sur la connexion fluidique 1003 du circuit de couplage 600 assurant la connexion entre le générateur 101 et le circuit de refroidissement 200.

Le circuit intermédiaire 400 comprend au moins une vanne 4 du module de gestion des circuits agencée par exemple sur la connexion fluidique 302 pour contrôler la circulation du liquide de refroidissement dans le circuit intermédiaire.

Le circuit intermédiaire 400 n'est pas en connexion fluidique avec le circuit de refroidissement 200. La connexion fluidique 1001 et la connexion fluidique 1003 du circuit de couplage assurant les connexions respectivement entre le circuit de refroidissement 200 et l'échangeur thermique 10, et, le générateur 201 et le circuit de refroidissement 200, ne sont pas connectées fluidiquement, elles ne reçoivent pas de circulation de liquide de refroidissement, lorsque le circuit intermédiaire 400 est en fonctionnement. Le circuit intermédiaire 400 est en circuit fermé entre l'échangeur thermique 10 et le générateur 201.

La circulation du liquide de refroidissement dans le circuit intermédiaire 400 est commandée par le module de gestion des circuits. Le module de gestion des circuits autorise la circulation du liquide de refroidissement dans le circuit intermédiaire 400 lorsque la production de froid est demandée et que la température du liquide de refroidissement est inférieure à une valeur cible, signifiant que le liquide de refroidissement ne comprend pas suffisamment de chaleur fatale pour être utilisée par la machine à absorption. Le module de gestion des circuits découple le circuit intermédiaire 400 et le circuit de refroidissement 200. Typiquement pour une application mobile dans un véhicule, cela correspond à une phase de démarrage, en phase de montée de la température du moteur 201. L'inertie thermique des gaz d'échappement étant plus faible que l'inertie thermique du circuit de refroidissement 200 du moteur, la chaleur fatale des gaz d'échappement est utilisée en premier. Le circuit de refroidissement 200 fonctionne d'ailleurs avantageusement en circuit réduit 210 pour faciliter la montée en température rapide du moteur 201.

Selon l'invention, le système comprend un circuit de chauffage 500 illustré à la figure 4. Le circuit de chauffage 500 est configuré pour assurer la connexion fluidique du circuit de refroidissement 200 à l'échangeur thermique 10. Le circuit de chauffage 500 est destiné à recevoir un fluide caloporteur préférentiellement identique au fluide de refroidissement du circuit de refroidissement 200. De cette manière, le circuit de refroidissement 200 est en connexion fluidique avec l'échangeur thermique 10 et il n'est pas nécessaire d'agencer un échangeur intermédiaire entre le circuit de refroidissement 200 et le circuit de chauffage 500. La récupération de la chaleur fatale des gaz d'échappement est ainsi optimale.

Le circuit de chauffage 500 comprend une connexion fluidique 1011 assurant la connexion du circuit de refroidissement 200, avantageusement en aval du moteur thermique 201, c'est à dire la sortie 2011 du moteur thermique 201 avec l'échangeur thermique 10, préférentiellement en entrée. Le circuit de chauffage 500 comprend une connexion fluidique 300 assurant la connexion de l'échangeur thermique 10, préférentiellement en sortie, avec le circuit de refroidissement 200 plus précisément avec une connexion fluidique 1013 assurant la connexion fluidique avec le circuit de refroidissement 200. La connexion fluidique 1013 assurant la connexion de la connexion fluidique 300 au circuit de refroidissement 200, avantageusement en amont du moteur thermique 201, préférentiellement en amont du radiateur 202. Selon l'agencement illustré aux figures 1 et 4, la connexion fluidique 1013 assure la connexion avec le circuit de refroidissement 200 et plus précisément avec le circuit d'alimentation 210 de l'aérotherme 203.

La circulation du liquide de refroidissement dans le circuit de chauffage 500 est commandée par le module de gestion des circuits. Le module de gestion des circuits autorise la circulation du liquide de refroidissement dans le circuit de chauffage 500 lorsque la production de froid n'est pas demandée et que la température du liquide de refroidissement est inférieure à une valeur cible. La chaleur fatale des gaz d'échappement est alors utilisée pour chauffer le liquide de refroidissement pour améliorer la vitesse de montée en température moteur et éventuellement de l'huile comprise dans le moteur et donc des gaz d'échappement. Typiquement pour une application mobile dans un véhicule, cela correspond à une phase de démarrage sans demande de réfrigération.

Le système selon l'invention comprend un module de gestion des circuits. Le module de gestion est configuré pour définir les conditions dans lesquelles les circuits sont utilisés, notamment dans quelles conditions la chaleur fatale des gaz d'échappement est récupérée avec ou sans la chaleur fatale du circuit de refroidissement 200. Une première condition est la demande de production de froid par la machine à absorption, la demande de production de froid peut-être vérifiée par le module de gestion des circuits en fonction d'une commande binaire c'est-à-dire valeur de production de froid non nulle signifiant une demande de production de froid et une valeur de production de froid nul signifiant une absence de demande de production de froid. Une deuxième condition peut être la température du liquide de refroidissement à la sortie 2011 du moteur thermique 201. Avantageusement, le module de gestion des circuits comprend un moyen de mesure de la température du liquide de refroidissement. Avantageusement, le module de gestion comprend un moyen de sélection d'une température seuil du liquide de refroidissement qui est fonction de la température du moteur thermique.

Lorsqu'il y a une demande de production de froid, c'est à dire par exemple de climatisation de l'habitacle d'un véhicule, le module de gestion des circuits vérifie que la température du liquide de refroidissement à la sortie 2011 du moteur thermique 201 est supérieure ou égale à une température seuil prédéfinie. Si la condition est remplie, le liquide de refroidissement du circuit de refroidissement 200 comprend de la chaleur fatale qui est exploitable par le générateur 101 de la machine à absorption. Il est à noter que comme l'inertie thermique des gaz d'échappement est plus faible que l'inertie thermique du circuit de refroidissement 200 du moteur 201, lorsque la condition de température est remplie pour le liquide de refroidissement, il est alors également possible d'utiliser la chaleur fatale des gaz d'échappement circulant dans la ligne d'évacuation des gaz d'échappement 11. Dans ce cas, le module de gestion des circuits contrôle l'ouverture et la fermeture des vannes 3,4,5,6, pour assurer la circulation du liquide de refroidissement dans le circuit de couplage illustré à la figure 2.

Si la condition de température du liquide de refroidissement n'est pas remplie, c'est-à-dire que la température du liquide de refroidissement à la sortie 2011 du moteur thermique 201 est inférieure à une température seuil prédéfinie, le module de gestion des circuits contrôle l'ouverture et la fermeture des vannes 3,4,5,6, pour assurer la circulation du liquide de refroidissement dans le circuit de refroidissement 200 et de manière découplée dans le circuit intermédiaire 400 illustré à la figure 3, pour utiliser uniquement la chaleur fatale des gaz d'échappement comme source de chaleur pour le générateur 101 de la machine à absorption.

Lorsqu'il n'y a pas de demande de production de froid, c'est-à-dire par exemple qu'il n'y a pas de demande de climatisation de l'habitacle d'un véhicule, le module de gestion des circuits vérifie que la température du liquide de refroidissement à la sortie 2011 du moteur thermique 201 est inférieure à une température seuil prédéfinie, le module de gestion des circuits contrôle l'ouverture et la fermeture des vannes 3,4,5,6, pour assurer la circulation du liquide de refroidissement dans le circuit de chauffage 500 de manière à découplée le générateur 101, pour utiliser la chaleur fatale des gaz d'échappement pour chauffer le liquide de refroidissement du moteur 201 et avantageusement augmenter rapidement la température du moteur.

### REFERENCES

- 1.: Flux d'air
- 2.: Flux d'air
- 3.: Vanne
- 4.: Vanne
- 5.: Vanne
- 6.: Vanne
- 7.: Pompe

- 10.: Echangeur thermique
- 11.: ligne d'évacuation gaz d'échappement
- 12.: Dérivation gaz d'échappement

- 100.: Circuit fluidique d'absorption
- 101.: Générateur
- 102.: Condenseur
- 103.: Evaporateur
- 104.: Absorbeur

- 200.: Circuit de refroidissement
- 201.: Moteur thermique
- 2011.: Sortie liquide de refroidissement du moteur
- 202.: Radiateur moteur
- 203.: Aérotherme cabine
- 204.: Branche de dérivation
- 205.: Module de régulation du circuit de refroidissement

- 210.: Circuit d'alimentation de l'aérotherme
- 211.: Circuit réduit

- 300.: Dérivation du générateur
- 301.: Dérivation circuit de refroidissement
- 302.: Dérivation circuit intermédiaire

- 400.: Circuit intermédiaire
- 500.: Circuit de chauffage
- 600.: Circuit de couplage

- 1001.: Connexion fluidique
- 1011.: Connexion fluidique
- 1002.: Connexion fluidique
- 1012.: Connexion fluidique
- 1003.: Connexion fluidique
- 1013.: Connexion fluidique

## Revendications

1. Système de production et de gestion de froid par une machine à absorption à partir de l'énergie fatale d'un moteur thermique comprenant
- une ligne d'évacuation de gaz d'échappement (11) d'un moteur thermique à combustion interne (201),
- un circuit de refroidissement (200) du moteur thermique (201) à combustion interne destiné à recevoir un liquide de refroidissement
- une machine à absorption comprenant un générateur (101) pour la production de froid à partir d'une source de chaleur issue de l'énergie fatale du moteur thermique (201) comprenant au moins partiellement la chaleur fatale des gaz d'échappement du moteur thermique (201) et la chaleur fatale du liquide de refroidissement du circuit de refroidissement (200) du moteur thermique (201),
- un échangeur thermique (10) agencé sur la ligne d'évacuation (11) des gaz d'échappement
- un circuit de couplage (600) configuré pour assurer la connexion fluidique du circuit de refroidissement (200) vers l'échangeur thermique (10), de l'échangeur thermique (10) vers le générateur (101), du générateur (101) vers le circuit de refroidissement (200) de sorte à transférer au générateur (101) la chaleur fatale du circuit de refroidissement (200) et la chaleur fatale des gaz d'échappement
où il comprend :
- un circuit intermédiaire (400) configuré pour assurer la connexion fluidique de l'échangeur thermique (10) vers le générateur (101) et du générateur (101) vers l'échangeur thermique (10) de sorte à transférer la chaleur fatale des gaz d'échappement au générateur (101) sans connexion fluidique au circuit de refroidissement (200), en découplant le circuit de refroidissement (200) sans circulation fluidique entre le circuit intermédiaire (400) et le circuit de refroidissement (200),
- un circuit de chauffage (500) configuré pour assurer la connexion fluidique du circuit de refroidissement (200) vers l'échangeur thermique (10) et de l'échangeur thermique (10) vers le circuit de refroidissement (200) avantageusement sans connexion fluidique au générateur (101), et
- - un module de gestion des circuits comprenant des vannes (3, 4, 5, 6) configurées pour orienter le liquide de refroidissement en fonction du circuit à utiliser
**caractérisé en ce que**
le module de gestion des circuits est configuré pour contrôler l'ouverture et la fermeture des vannes (3,4,5,6), pour assurer la circulation du liquide de refroidissement dans le circuit de refroidissement (200) et de manière découplée dans le circuit intermédiaire (400) lorsque la température du liquide de refroidissement en sortie du moteur thermique 201 est inférieure à une température seuil prédéfinie.

2. Système selon la revendication précédente dans lequel le circuit de couplage (600), le circuit intermédiaire (400), le circuit de chauffage (500) sont destinés à recevoir un liquide de refroidissement identique au liquide de refroidissement du circuit de refroidissement (200) du moteur.

3. Système selon l'une quelconque des revendications précédentes dans lequel le circuit intermédiaire (400) comprend une connexion fluidique (1012) configurée pour assurer la circulation du liquide de refroidissement de l'échangeur thermique (10) vers le générateur (101) et qui est commune au circuit de couplage (600).

4. Système selon l'une quelconque des revendications précédentes dans lequel le circuit de chauffage (105) comprend une connexion fluidique (1011) configurée pour assurer la circulation du liquide de refroidissement du circuit de refroidissement (200) vers l'échangeur thermique (10) et qui est commune au circuit de couplage (500).

5. Système selon l'une quelconque des revendications précédentes comprenant une dérivation (12) de la ligne d'évacuation (11) des gaz d'échappement configurée pour contourner l'échangeur thermique (10).

6. Système selon l'une quelconque des revendications précédentes dans lequel le module de gestion des circuits comprend une pompe (7) destinée à assurer la circulation du fluide de refroidissement dans le circuit intermédiaire (400) ou dans le circuit de couplage(600).

7. Procédé d'utilisation d'un système de production de froid selon l'une quelconque des revendications précédentes dans lequel le module de gestion des circuits commande la circulation du liquide de refroidissement dans le circuit de couplage (600), et/ou le circuit de chauffage (500) et/ou le circuit intermédiaire (400) en fonction d'au moins deux critères dont la production de froid par la machine à absorption et la température du liquide de refroidissement (201).

8. Procédé selon la revendication précédente dans lequel le module de gestion des circuits commande la circulation du liquide de refroidissement dans le circuit de couplage (600) lorsque la température du liquide de refroidissement a atteint une température seuil prédéfinie et que la production de froid est inférieure ou égale à une valeur seuil prédéfinie non nulle.

9. Procédé selon la revendication 7 dans lequel le module de gestion des circuits commande la circulation du liquide de refroidissement dans le circuit de chauffage (500) lorsque la température du liquide de refroidissement est inférieure à une température seuil prédéfinie et que la production de froid est égale à une valeur seuil prédéfinie nulle.

10. Procédé selon la revendication 7 dans lequel le module de gestion des circuits commande la circulation du liquide de refroidissement dans le circuit intermédiaire (400) lorsque la température du liquide de refroidissement est inférieure à une température seuil prédéfinie et que la production de froid est inférieure ou égale à une valeur seuil prédéfinie non nulle.

11. Utilisation d'un système selon l'une quelconque des revendications 1 à 6 pour refroidir l'air d'un habitacle de véhicule.

12. Véhicule comprenant un moteur thermique à combustion interne (201) et un système selon l'une quelconque des revendications 1 à 6.

## Patentansprüche

1. Kälteerzeugungs- und Steuerungssystem durch eine Absorptionsmaschine ausgehend von der ungenutzten Energie eines Verbrennungsmotors, umfassend
- eine Abgasabfuhrleitung (11) eines Verbrennungsmotors (201),
- einen Kühlkreislauf (200) des Verbrennungsmotors (201), der dazu bestimmt ist, eine Kühlflüssigkeit aufzunehmen,
- eine Absorptionsmaschine, die einen Generator (101) für die Kälteproduktion ausgehend von einer Wärmequelle umfasst, die aus der ungenutzten Energie des Verbrennungsmotors (201) stammt, die mindestens teilweise ungenutzte Wärme der Abgase des Verbrennungsmotors (201) und ungenutzte Wärme der Kühlflüssigkeit des Kühlkreislaufs (200) des Verbrennungsmotors (201) umfasst,
- einen Wärmetauscher (10), der auf der Abgasabfuhrleitung (11) eingerichtet ist,
- einen Kopplungskreislauf (600), der dazu konfiguriert ist, die fluidische Verbindung des Kühlkreislaufs (200) zu dem Wärmetauscher (10), von dem Wärmetauscher (10) zu dem Generator (101), von dem Generator (101) zu dem Kühlkreislauf (200) derart sicherzustellen, dass dem Generator (101) die ungenutzte Wärme des Kühlkreislaufs (200) und die ungenutzte Wärme der Abgase transferiert wird, wobei er Folgendes umfasst:
- einen Zwischenkreislauf (400), der dazu konfiguriert ist, die fluidische Verbindung des Wärmetauschers (10) zu dem Generator (101) und von dem Generator (101) zu dem Wärmetauscher (10) derart sicherzustellen, dass die ungenutzte Wärme der Abgase an den Generator (101) ohne fluidische Verbindung mit dem Kühlkreislauf (200) transferiert wird, indem der Kühlkreislauf (200) ohne Fluidzirkulation zwischen dem Zwischenkreislauf (400) und dem Kühlkreislauf (200) abgekoppelt wird,
- einen Heizkreislauf (500), der dazu konfiguriert ist, die fluidische Verbindung des Kühlkreislaufs (200) zu dem Wärmetauscher (10) und von dem Wärmetauscher (10) zu dem Kühlkreislauf (200) vorteilhafterweise ohne Fluidverbindung mit dem Generator (101) sicherzustellen, und
- ein Steuerungsmodul der Kreisläufe, das Schieber (3, 4, 5, 6) umfasst, die dazu konfiguriert sind, die Kühlflüssigkeit in Abhängigkeit von dem zu verwendenden Kreislauf zu lenken,
**dadurch gekennzeichnet, dass** das Steuerungsmodul der Kreisläufe dazu konfiguriert ist, das Öffnen und das Schließen der Schieber (3, 4, 5, 6) zu steuern, um die Zirkulation der Kühlflüssigkeit in dem Kühlkreislauf (200) und auf abgekoppelte Weise in dem Zwischenkreislauf (400) sicherzustellen, wenn die Temperatur der Kühlflüssigkeit am Ausgang des Verbrennungsmotors (201) geringer ist als eine vordefinierte Schwellentemperatur.

2. System nach dem vorstehenden Anspruch, wobei der Kopplungskreislauf (600), der Zwischenkreislauf (400), der Heizkreislauf (500) dazu bestimmt sind, eine Kühlflüssigkeit aufzunehmen, die mit der Kühlflüssigkeit des Kühlkreislaufs (200) des Motors identisch ist.

3. System nach einem der vorstehenden Ansprüche, wobei der Zwischenkreislauf (400) eine Fluidverbindung (1012) umfasst, die dazu konfiguriert ist, die Zirkulation der Kühlflüssigkeit von dem Wärmetauscher (10) zu dem Generator (101) sicherzustellen, und die gemeinsam von dem Kopplungskreislauf (600) genutzt wird.

4. System nach einem der vorstehenden Ansprüche, wobei der Heizkreislauf (105) eine Fluidverbindung (1011) umfasst, die dazu konfiguriert ist, die Zirkulation der Kühlflüssigkeit des Kühlkreislaufs (200) zu dem Wärmetauscher (10) sicherzustellen, und die von dem Kopplungskreislauf (500) gemeinsam genutzt wird.

5. System nach einem der vorstehenden Ansprüche, das eine Abzweigung (12) der Abgasabfuhrleitung (11) der Abgase umfasst, die dazu konfiguriert ist, den Wärmetauscher (10) zu umgehen.

6. System nach einem der vorstehenden Ansprüche, wobei das Steuermodul der Kreisläufe eine Pumpe (7) umfasst, die dazu bestimmt ist, die Zirkulation des Kühlfluids in dem Zwischenkreislauf (400) oder in dem Kopplungskreislauf (600) sicherzustellen.

7. Verfahren zur Verwendung eines Kälteerzeugungs- und Steuerungssystems nach einem der vorstehenden Ansprüche, wobei das Steuerungsmodul der Kreisläufe die Zirkulation der Kühlflüssigkeit in dem Kopplungskreislauf (600), und/oder dem Heizkreislauf (500) und/oder dem Zwischenkreislauf (400) in Abhängigkeit von mindestens zwei Kriterien betätigt, darunter die Kälteerzeugung durch die Absorptionsmaschine und die Temperatur der Kühlflüssigkeit (201).

8. Verfahren nach dem vorstehenden Anspruch, wobei das Steuerungsmodul der Kreisläufe die Zirkulation der Kühlflüssigkeit in dem Kopplungskreislauf (600) betätigt, wenn die Temperatur der Kühlflüssigkeit eine vordefinierte Schwellentemperatur erreicht hat, und die Kälteerzeugung geringer oder gleich einem vordefinierten Schwellenwert nicht gleich Null ist.

9. Verfahren nach Anspruch 7, wobei das Steuerungsmodul der Kreisläufe die Zirkulation der Kühlflüssigkeit in dem Heizkreislauf (500) betätigt, wenn die Temperatur der Kühlflüssigkeit geringer ist als ein vordefinierter Schwellenwert, und die Kälteproduktion gleich einem vordefinierten Schwellenwert gleich Null ist.

10. Verfahren nach Anspruch 7, wobei das Steuerungsmodul der Kreisläufe die Zirkulation der Kühlflüssigkeit in dem Zwischenkreislauf (400) betätigt, wenn die Temperatur der Kühlflüssigkeit niedriger ist als eine vordefinierte Schwellentemperatur, und die Kälteproduktion geringer oder gleich einem vorbestimmten Schwellenwert nicht gleich Null ist.

11. Verwendung eines Systems nach einem der Ansprüche 1 bis 6 zum Kühlen der Luft eines Fahrzeuginnenraums.

12. Fahrzeug, das einen Verbrennungsmotor (201) und ein System nach einem der Ansprüche 1 bis 6 umfasst.

## Claims

1. System for producing and managing refrigeration by an absorption machine from residual energy from a combustion engine comprising
- an exhaust gas discharge line (11) of an internal combustion engine (201),
- a cooling circuit (200) of the internal combustion engine (201) intended to receive a cooling liquid,
- an absorption machine comprising a generator (101) to produce refrigeration from a heat source coming from the residual energy of the combustion engine (201) comprising at least partially the residual heat from the exhaust gases of the combustion engine (201) and the residual heat of the cooling liquid of the cooling circuit (200) of the combustion engine (201),
- a heat exchanger (10) arranged on the exhaust gas discharge line (11),
- a coupling circuit (600) configured to ensure the fluid connection of the cooling circuit (200) to the heat exchanger (10), of the heat exchanger (10) to the generator (101), of the generator (101) to the cooling circuit (200) so as to transfer to the generator (101), the residual heat from the cooling circuit (200) and the residual heat from the exhaust gases, where it comprises:
- an intermediate circuit (400) configured to ensure the fluid connection of the heat exchanger (10) to the generator (101) and of the generator (101) to the heat exchanger (10) so as to transfer the residual heat from the exhaust gases to the generator (101) without fluid connection to the cooling circuit (200), by decoupling the cooling circuit (200) without fluid circulation between the intermediate circuit (400) and the cooling circuit (200),
- a heating circuit (500) configured to ensure the fluid connection of the cooling circuit (200) to the heat exchanger (10) and of the heat exchanger (10) to the cooling circuit (200) advantageously without fluid connection to the generator (101), and
- a circuit management module comprising valves (3, 4, 5, 6) configured to orient the cooling liquid according to the circuit to be used, **characterised in that** the circuit management module is configured to control the opening and the closing of the valves (3, 4, 5, 6), to ensure the circulation of the cooling liquid in the cooling circuit (200) and in a decoupled manner in the intermediate circuit (400), when the temperature of the cooling liquid at the outlet of the combustion engine (201) is less than a predefined threshold temperature.

2. System according to the preceding claim, wherein the coupling circuit (600), the intermediate circuit (400), the heating circuit (500) are intended to receive a cooling liquid which is identical to the cooling liquid of the cooling circuit (200) of the engine.

3. System according to any one of the preceding claims, wherein the intermediate circuit (400) comprises a fluid connection (1012) configured to ensure the circulation of the cooling liquid from the heat exchanger (10) to the generator (101), and which is common to the coupling circuit (600).

4. System according to any one of the preceding claims, wherein the heating circuit (105) comprises a fluid connection (1011) configured to ensure the circulation of the cooling liquid from the cooling circuit (200) to the heat exchanger (10), and which is common to the coupling circuit (500).

5. System according to any one of the preceding claims, comprising a bypass (12) of the exhaust gas discharge line (11), configured to bypass the heat exchanger (10).

6. System according to any one of the preceding claims, wherein the circuit management module comprises a pump (7) intended to ensure the circulation of the cooling fluid in the intermediate circuit (400) or in the coupling circuit (600).

7. Method for using a system for producing refrigeration according to any one of the preceding claims, wherein the circuit management module controls the circulation of the cooling liquid in the coupling circuit (600), and/or the heating circuit (500) and/or the intermediate circuit (400) according to a least two criteria, the refrigeration production of which by the absorption machine and the temperature of the cooling liquid (201).

8. Method according to the preceding claim, wherein the circuit management module controls the circulation of the cooling liquid in the coupling circuit (600) when the temperature of the cooling liquid has reached a predefined threshold temperature and that the refrigeration production is less than or equal to a non-zero predefined threshold value.

9. Method according to claim 7, wherein the circuit management module controls the circulation of the cooling liquid in the heating circuit (500) when the temperature of the cooling liquid is less than a predefined threshold temperature, and that the refrigeration production is equal to a zero predefined threshold value.

10. Method according to claim 7, wherein the circuit management module controls the circulation of the cooling liquid in the intermediate circuit (400) when the temperature of the cooling liquid is less than a predefined threshold temperature, and that the refrigeration production is less than or equal to a non-zero predefined threshold value.

11. Use of a system according to any one of claims 1 to 6, to cool the air of a vehicle cabin.

12. Vehicle comprising an internal combustion engine (201) and a system according to any one of claims 1 to 6.
